(19) **Europäisches Patentamt European Patent Office Office européen des brevets**

(11) **EP 1 950 556 A1**

(12) **EUROPEAN PATENT APPLICATION**
published in accordance with Art. 158(3) EPC

(43) Date of publication:
**30.07.2008 Bulletin 2008/31**

(51) Int Cl.:
**G01N 21/65** (2006.01)

(21) Application number: **06821905.4**

(22) Date of filing: **18.10.2006**

(86) International application number:
**PCT/JP2006/320703**

(87) International publication number:
**WO 2007/049487 (03.05.2007 Gazette 2007/18)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **25.10.2005 JP 2005309337**

(71) Applicant: **Kyushu University, National University Corporation Higashi-ku Fukuoka-shi Fukuoka 812-8581 (JP)**

(72) Inventors:
- **ONA, Toshihiro Fukuoka-shi, Fukuoka 812-8581 (JP)**
- **MURAKAMI, Shuichi Fukuoka-shi, Fukuoka 812-8581 (JP)**

(74) Representative: **HOFFMANN EITLE Patent- und Rechtsanwälte Arabellastrasse 4 81925 München (DE)**

(54) **SUBSTRATE FOR ANALYSIS FOR USE IN RAMAN SPECTROSCOPIC ANALYSIS AND SUBSTRATE ASSEMBLY FOR ANALYSIS**

(57)    To provide a substrate and a substrate assembly for Raman spectroscopic analysis that are capable of analyzing even a substance of a low concentration with high sensitivity.

A substrate 1 for Raman spectroscopic analysis comprises a predetermined transparent substrate 3 and metal particles 5 unevenly applied to a surface of the transparent substrate 3.

**Fig. 1**

**Description**

FIELD OF THE INVENTION

The present invention relates to a substrate and a substrate assembly for use in Raman spectroscopic analysis, and in particular, to a substrate and a substrate assembly that enables high-sensitivity analysis of a substance in a sample.

BACKGROUND ART

Raman spectroscopy utilizes inelastic scattering (Raman scattering) of light. Raman scattering is caused by each vibration of a molecule when irradiated with light; therefore, a spectrum produced by vibrations unique to a substance can be obtained by measuring the Raman scattering. Raman spectroscopy has come to attention in many fields including engineering, pharmacy, and agriculture, because it is capable of state analysis, as in infrared spectroscopy, is also capable of measuring samples of various shapes, is insusceptible to moisture, and has good wave-number accuracy, a short measurement time, and so on. Further, application to a quality control technique in manufacturing is also under consideration. However, detection sensitivity of a Raman spectrum is inherently low and, thus, not suitable for analysis of a minor component. Due to various factors including reproducibility, quantitativeness, and so on, Raman spectroscopy has never been applied to clerical medicine related to cancer diagnosis.

Surface-enhanced Raman spectroscopy (SERS), which is an improvement over Raman spectroscopy, utilizes a phenomenon in which Raman scattered light from molecules absorbed by a metal nanostructure is enhanced to a greater level than normal. It is considered that this enhancement of Raman scattering is in principle caused by a combination of two effects: local enhancement of electromagnetic fields due to roughness of a metal surface when molecules are absorbed by the metal surface (electromagnetic field effect); and charge transfer of the absorbed molecules to an unoccupied orbit in a locally enhanced field (chemical effect). Since the SERS enables quick analysis of a minor component, research is under way for the purpose of detecting environmental hormones, residual agricultural chemicals, toxic components, and so on.

DISCLOSURE OF THE INVENTION

PROBLEM TO BE SOLVED BY THE INVENTION

As stated above, the surface-enhanced Raman spectroscopy (SERS), one of several methods of analyzing a minor component, utilizes a phenomenon in which Raman scattering caused by chemical molecules absorbed by a metal nanostructure is enhanced up to about 10,000-fold. Conventionally, a substrate having metal particles attached thereon is placed in a sample and is irradiated with a single laser beam to detect reflected, scattered light. Only one SERS occurs in one measurement and is therefore bound by a theoretical detection limit. Further, it has been reported that chemical substances for enhancement differ, depending on the type of a metal attached to a substrate, and there has been a problem that there is difficulty in simultaneously measuring a plurality of components in an aqueous solution.

MEANS FOR OVERCOMING THE PROBLEM

In an application of an ordinary SERS, the inventors developed a method of SERS measurement. This method uses a plurality of substrates that are disposed in parallel relation to each other, each substrate being formed by vapor-depositing nanometer-order gold particles on a glass substrate in such a manner that the gold particles are spaced apart partially of the nanometer-order and otherwise of the micrometer-order. The method is conducted by transmitting laser light through the substrates and detecting reflected light with additional use of a near field. This is termed a transmissive multiple enhancement Raman spectroscopy (MERS). This technique is characterized by transmitting a single laser beam through a plurality of parallel substrates to simultaneously take a plurality of SERS measurements. Further enhancement is also expected due to a luminous effect and resonance with Raman scattered light, since a plurality of substrates are disposed in a certain volume of a solution. With use of a plurality of substrates, analyte molecules are more likely to adhere to the substrates, resulting in an increase in enhancement/sensitivity at a rate greater than or equal to a rate of increase simply in proportion to the number of substrates. The result of a pyridine measurement, as an example, shows that the detection limit is 128 ppb in an ordinary SERS and is 0.96 ppb in five enhancements (three substrates).

To obtain such a result, the present invention is characterized by a substrate for use in Raman spectroscopic analysis comprising a predetermined transparent substrate and metal particles unevenly applied to a surface of the transparent substrate.

The present invention is characterized in that the metal particles are concentrated with a space therein of the nanometer-order in a predetermined region on the transparent substrate, but, in the other region, dispersed with a space therein of the micrometer-order.

The present invention is characterized in that the metal particles are gold, silver, copper, platinum, palladium, aluminum, titanium, or cobalt.

The present invention is characterized in that the transparent substrate has a plate-like shape.

The present invention is characterized in that the transparent substrate has a cylindrical shape.

The present invention is characterized in that the transparent substrate has a rectangular shape.

The present invention is characterized in that at least two of said plate-like substrates for analysis are disposed in parallel relation to each other.

The present invention comprises said cylindrical substrate for analysis and at least one of said plate-like substrates for analysis inserted in the cylindrical substrate for analysis.

The present invention comprises at least two of said cylindrical substrates for analysis of different diameters, the substrate for analysis of a smaller diameter being disposed in the substrate for analysis of a larger diameter.

The present invention comprises said rectangular substrate for analysis and at least one of said plate-like substrates for analysis inserted in the rectangular substrate for analysis.

The present invention is characterized in that each of the plurality of substrates for analysis has particles of a different metal applied thereon.

EFFECT OF THE INVENTION

The present invention is capable of taking a plurality of SERS measurements by transmission of laser light and of obtaining a greater degree of enhancement than that of the SERS measurements. Further, the present invention has the following advantages over the prior art: the degree of enhancement can be adjusted by adding or removing the substrates; and multi-component detection can be conducted by combining a plurality of film substrates made of different metals.

BRIEF DESCRIPTION OF THE DRAWINGS

Fig. 1 is a side view of a substrate for analysis according to one embodiment of the present invention.

Fig. 2 is an atomic force microscopic image of gold particles attached to the substrate shown in Fig. 1.

Fig. 3 is a cross-sectional view of a cylindrical substrate used in a conventional Raman spectroscopy.

Fig. 4 is a cross-sectional view of a substrate assembly for analysis according to another embodiment of the present invention.

Fig. 5 is a cross-sectional view of a substrate assembly for analysis according to still another embodiment of the present invention.

Fig. 6 is a cross-sectional view of a substrate assembly for analysis according to still another embodiment of the present invention.

Fig. 7 is a cross-sectional view of a substrate assembly for analysis according to still another embodiment of the present invention.

Fig. 8 is a cross-sectional view of a substrate assembly for analysis according to still another embodiment of the present invention.

Fig. 9 conceptually illustrates the principles of Raman spectroscopy using the substrate assembly for analysis shown in Fig. 6.

Fig. 10 shows an example of application of a substrate assembly for analysis according to the present invention.

Fig. 11 is another example of application of a substrate assembly for analysis according to the present invention.

Fig. 12 is still another example of application of a substrate assembly for analysis according to the present invention.

Fig. 13 is still another example of application of a substrate assembly for analysis according to the present invention.

Fig. 14 is still another example of application of a substrate assembly for analysis according to the present invention.

Fig. 15 is a graph showing the relationship between the Raman shift and Raman intensity obtained by the present invention.

Fig. 16 shows comparison in detection limit concentration and degree of enhancement of detection sensitivity between no enhancement and one enhancement with use of the present invention.

Fig. 17 shows comparison between detection limit concentration and degree of enhancement of detection sensitivity between three enhancements and five enhancements with use of the present invention.

Fig. 18 is a graph showing the relationship between the Raman peak intensity and the pyridine concentration obtained by the present invention.

Fig. 19 is a graph showing the relationship between the Raman shift and the Raman intensity obtained by the present invention, using a heavy metal.

Fig. 20 shows comparison in detection limit concentration and degree of enhancement of detection sensitivity between no enhancement, one enhancement and three enhancements with use of the present invention in measurements of a heavy metal.

Fig. 21 is a graph showing the relationship between the Raman shift and the Raman intensity obtained by the present invention, using fungus.

[Reference Numerals]

| | |
|---|---|
| 1 | substrate for analysis |
| 3 | glass substrate |
| 5 | gold particles |
| 7 | concentrated region |
| 9 | dispersed region |
| 21 | substrate assembly for analysis |
| 23 | cylindrical glass substrate |
| 25a | gold particles |
| 25b | plate-like glass substrate |
| 31 | glass substrate for analysis |
| 33 | gold particles |
| 35 | cylindrical glass substrate |
| 41 | substrate assembly for analysis |
| 43 | cylindrical substrate for analysis |
| 45 | plate-like substrate for analysis |
| 51 | substrate assembly for analysis |
| 53 | cylindrical substrate for analysis (larger diameter) |
| 55 | cylindrical substrate for analysis (smaller diameter) |
| 61 | substrate assembly for analysis |
| 63 | plate-like substrate for analysis |
| 71 | substrate assembly for analysis |
| 73 | plate-like substrate for analysis |
| 75 | container |
| 81 | substrate assembly for analysis |
| 101 | substrate assembly for analysis |
| 103 | substrate for analysis |
| 105 | substrate for analysis |
| 111 | substrate assembly for analysis |
| 113 | substrate for analysis |
| 115 | substrate for analysis |
| 121 | substrate assembly for analysis |
| 123 | substrate for analysis |
| 125 | substrate for analysis |
| 127 | substrate for analysis |
| L | laser beam |
| R | Raman scattering |
| S | analyte molecule |
| T | sample |

BEST MODE FOR CARRYING OUT THE INVENTION

Next, one embodiment of the present invention will be described with reference to figures.

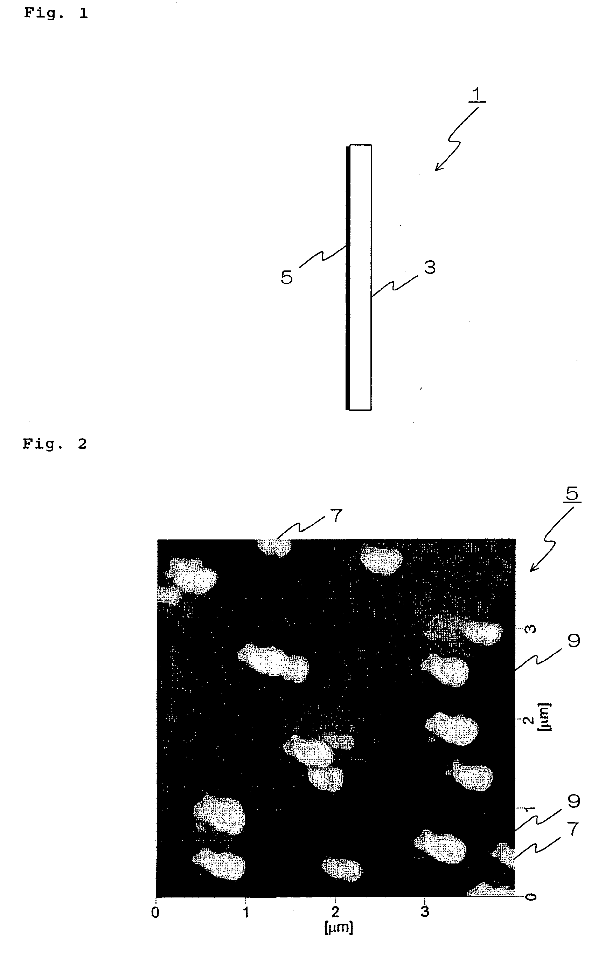

Fig. 1 is a side view showing an example of a substrate 1 for analysis having gold particles 5 applied to a surface of a transparent substrate, that is, a glass substrate 3 made of a glass plate. Fig. 2 is an atomic force microscopic image of a part of a surface of the substrate 1 for analysis. In Fig. 1, a thickness of a layer of vapor-deposited gold particles 5 is enlarged for convenience of description. The atomic force microscopic image of Fig. 2 is $4\times4$ $\mu$m. White portions in Fig. 2 are regions 7 where gold particles are concentrated, while black portions are regions 9 where gold particles are dispersed. In the concentrated regions 7, gold particles are close to each other by a space of the nanometer-order. In the dispersed regions 9, gold particles are dispersed from each other by a space of the micrometer-order. The reason for such an uneven distribution is that a laser beam used in Raman spectroscopy can be transmitted through the substrate 1 for analysis, while Raman scattering can be enhanced in the concentrated regions 7. Metal particles to be used are not limited to gold, but can be particles of silver, copper, platinum, palladium, aluminum, titanium, cobalt, or the like. The metal particles are metal nanoparticles of the order of nanometers, including metal nanostructures such as nanorods.

The gold particles can be concentrated or dispersed to any degree. However, the following conditions need to be satisfied to enable reliable analysis of even a sample with a low substance concentration.

$$[\text{Eq. 1}]$$

$$\frac{\sum_{b=1}^{n} Ir(n)}{N(n)} > D$$

Assumption is made here that the concentration of analyte molecules in a sample is so low that a normal Raman spectroscopic analysis cannot be used. In the above equation, n denotes the number of transmissions of light through gold deposited surfaces, which number can also be referred to as a number of enhancements; $Ir(x)$ denotes a Raman scattering intensity of light that is Raman scattered from a sample when it has transmitted through the xth glass substrate and that arrives at a detecting portion; $N(n)$ denotes a total amount of noise detected during n transmissions; and D denotes a Raman signal detection lower limit for a measurement device (detector).

The substrate 1 for analysis according to the present embodiment is produced by a gold vapor deposition method, using a commercially available ion coater. In an actual vapor deposition process, the glass substrate 3 is separated by 4.5 cm from the center of a target and tilted at a height of 7 cm, and the time spent on vapor deposition is 30 minutes. In this process, a vapor-deposition voltage is 1.2 kV, and a vapor-deposition current is 5.5 mA. However, these conditions need to be optimally adjusted for each ion coater to be used. Similarly, a substrate for analysis made of a glass cylinder is also produced by gold vapor deposition method under the following vapor deposition conditions: the glass cylinder is positioned 1.5 cm straight up from a target; and the time required for vapor deposition is 30 minutes; a vapor deposition voltage is 1.2 kV; and a vapor deposition current is 5.5 mA. It is to be noted that in the present invention, the ion coater can be replaced with another device to form a substrate for analysis, as long as an uneven distribution of metal particles (such as gold) can be obtained. A desired substrate for analysis can be formed, for example, in the following method using a monomolecular film and a metallic colloid: the monomolecular film having holes of the order of manometers separated by a space of the order of micrometers is formed on the substrate; the metal nano-colloid is applied thereto; and subsequently, the monomolecular film is removed from the substrate. Alternatively, a nanolithography method or a laser ablation method can be used to produce the substrate.

The substrate 1 for analysis made of a glass plate is formed in a size of about 3x15 mm to 4×15 mm, such that it can be placed, when required, in a substrate for analysis made of a glass cylinder. The glass cylinder is formed by cutting a commercially available NMR glass tube (5 mmφ) to a length of about 3 cm. The substrates for analysis described so far use plate-like or cylindrical transparent substrates. However, the present invention is not limited to these substrates, and a glass container such as a rectangular glass cell can be used instead as a transparent substrate. Needless to say, the glass container can be formed in a cubic shape. The transparent substrates can be made of any transparent material such as transparent plastic or sapphire glass.

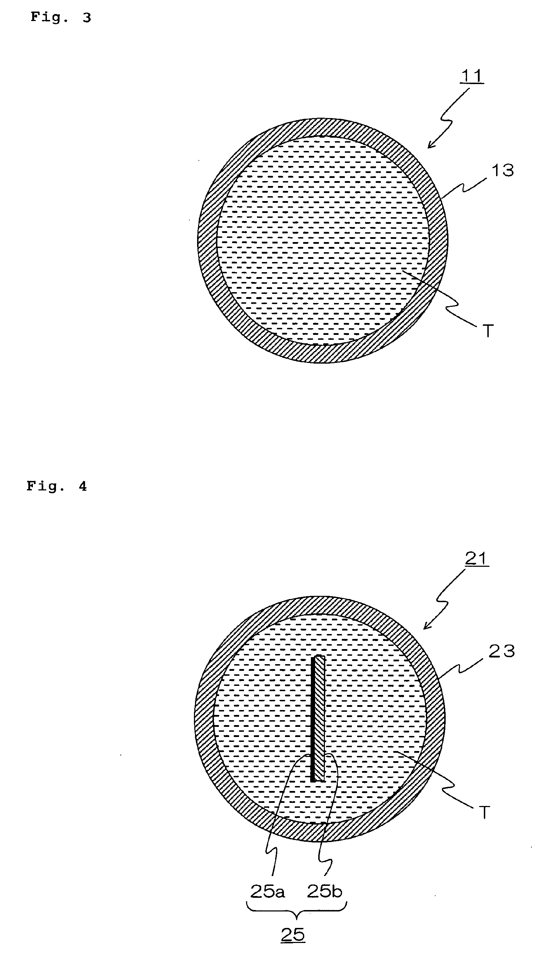

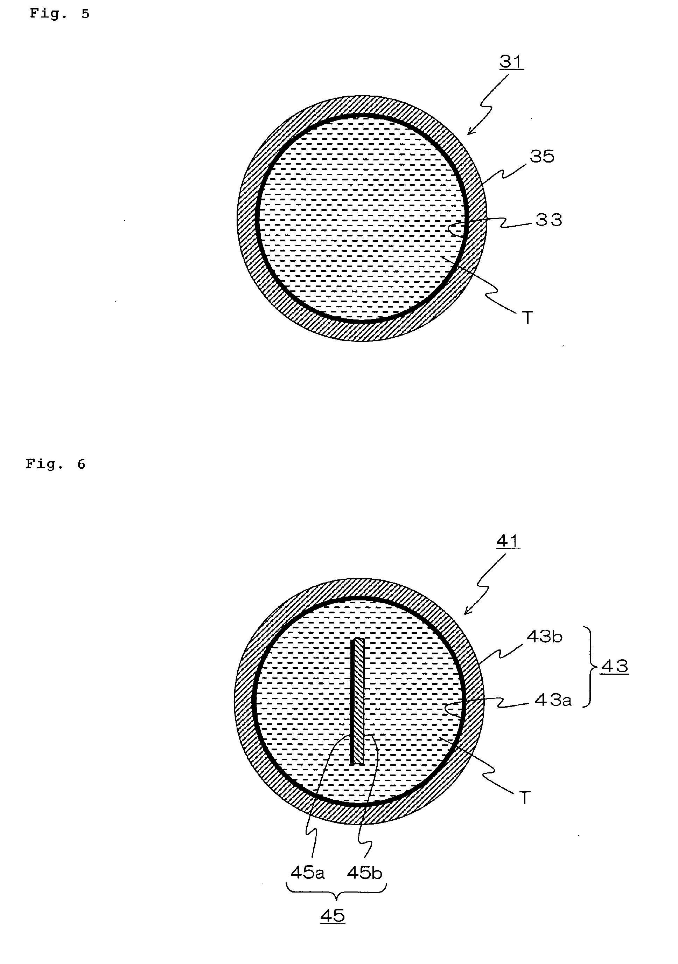

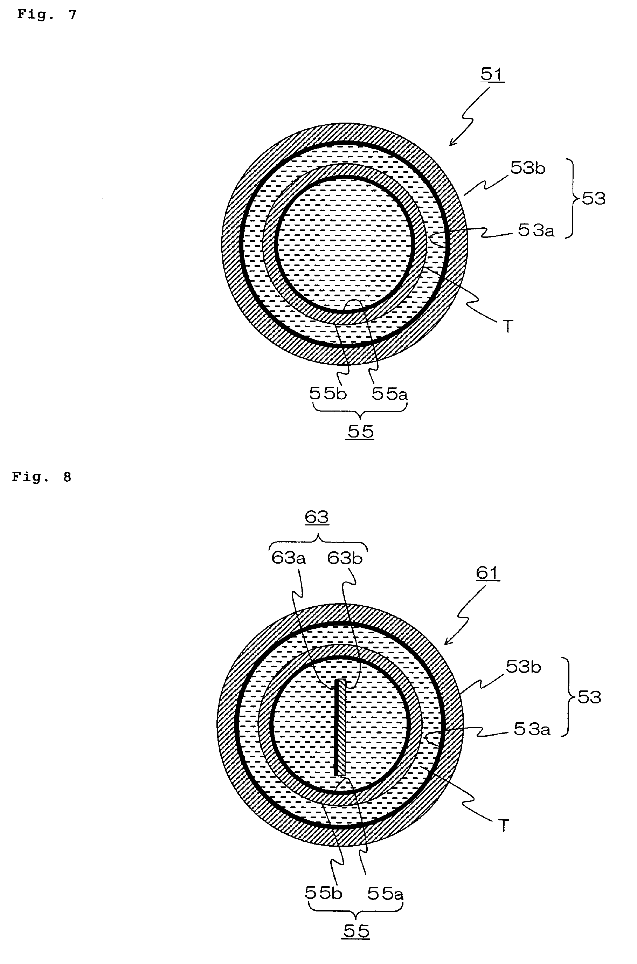

Next, various specific examples of substrates and substrate assemblies for analysis will be described. Fig. 3 shows a substrate 11 used in normal Raman measurements (no multiple enhancement), the substrate 11 including an ordinary glass cylinder filled with a sample T (about 300 μl). Fig. 4 shows a substrate assembly 21 for analysis used in SERS measurements (one multiple enhancement), the substrate assembly 21 including: an ordinary glass cylinder 23 filled with a sample T (about 300 μl); and a substrate 25 for analysis made of a glass plate 25b having gold particles 25a vapor-deposited thereon. Fig. 5 shows a substrate 31 for analysis used in MERS measurements (three multiple enhancements), the substrate 31 including a glass cylinder 35 having gold particles 33 vapor-deposited thereon and being filled with a sample T (about 300 μl). Fig. 6 shows a substrate assembly 41 for analysis used in MERS measurements (five multiple enhancements), the substrate 41 including a substrate 43 for analysis made of a glass cylinder 43b having gold particles 43a vapor-deposited thereon, the substrate 43 being filled with a sample T (about 300 μl) and provided

therein with a substrate 45 for analysis made of a glass plate 45b having gold particles 45a vapor-deposited thereon. Fig. 7 shows a substrate assembly 51 for analysis used in MERS measurements (seven multiple enhancements), the substrate assembly 51 having a substrate 53 for analysis made of a glass cylinder 53b having gold particles 53a vapor-deposited thereon and filled with a sample T (about 300 μl) and provided therein with a substrate 55 for analysis made of a glass cylinder 55b of a small diameter, the substrate 55 having gold particles 55a vapor-deposited thereon. Fig. 8 shows a substrate assembly 61 for analysis used in MERS measurements (nine multiple enhancements), the substrate assembly 61 being formed by adding a substrate 63 for analysis made of a glass plate 63b having gold particles 63a vapor-deposited thereon, to the structure shown in Fig. 7.

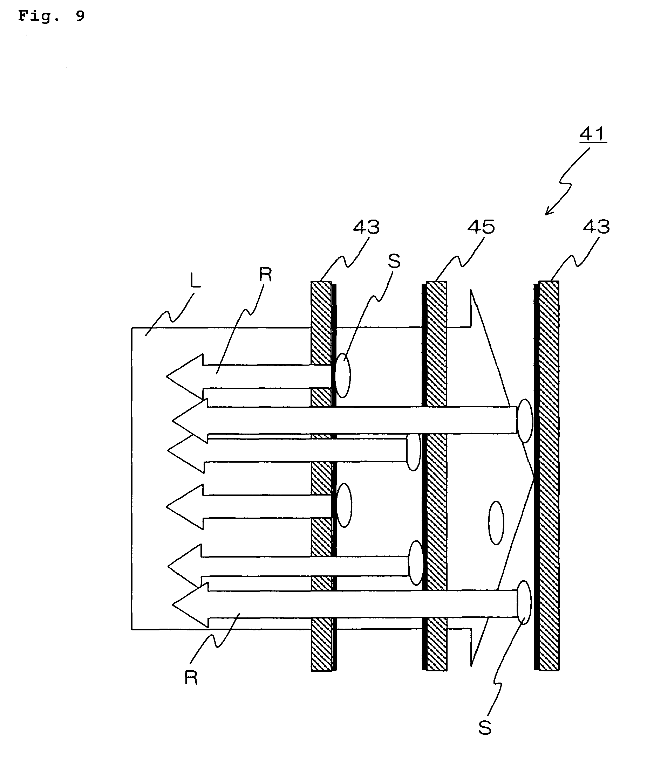

Fig. 9 conceptually illustrates the principles of enhancement when a Raman spectroscopic analysis is conducted, using the substrate assembly 41 for analysis shown in Fig. 6. Although, in Fig. 6, the cylindrical substrate 43 for analysis is incorporated into the assembly, all the substrates for analysis are illustrated in a planar shape in Fig. 9 for convenience of explanation. As shown in Fig. 9, a laser beam L is irradiated from the left side of the substrate assembly 41 for analysis. A part of the laser beam L is Raman-scattered R by analyte molecules S on the first (left) substrate 43 for analysis and is reflected towards a light source (not shown). The rest of the laser beam L passes through the first substrate 43 for analysis and reaches the second substrate 45 for analysis, where a part of the laser beam L is also Raman-scattered R by analyte molecules on the substrate 45 for analysis and is reflected toward the light source. Further, the laser beam L that has passed through the second substrate 45 for analysis reaches the third (right) substrate 43 for analysis where the laser beam L is Raman-scattered R by analyte molecules S. In addition, light that has been reflected by the second substrate 45 for analysis toward the light source is also Raman-scattered R by the first substrate 43 for analysis, and light that has been reflected by the third substrate 43 for analysis are also Raman-scattered R by the second and first substrates 45 and 43 for analysis. Therefore, the laser beam L from the light source undergoes a maximum of five transmissions through or reflections from the substrates 43 and 45 for analysis until it is reflected. In this way, the detection sensitivity can be enhanced.

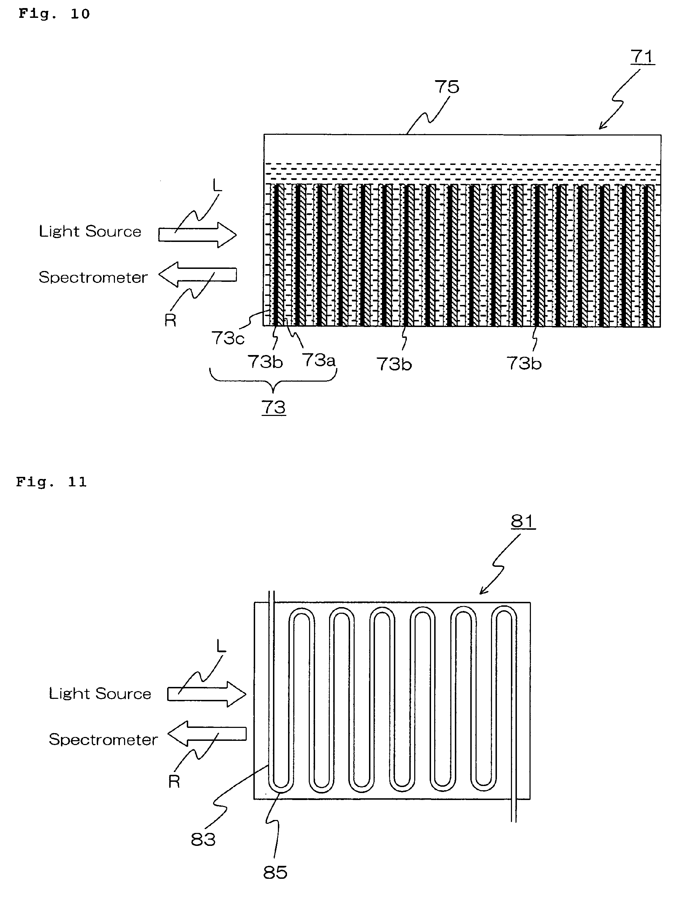

Fig. 10 shows an example of application of a substrate assembly for analysis. The substrate assembly 71 for analysis comprises a plurality of substrates 73 for analysis made of glass plates 73a, the substrates being disposed in parallel relation to each other and is accommodated in a predetermined container 75. A coating layer 73c with a thickness of the submicron order is applied to a surface of each substrate 73 used in this example, so as to cover gold particles 73b. A container 75 is filled with an aqueous solution including analyte molecules. The substrate assembly 71 for analysis is irradiated with a laser beam to measure Raman scattering R, using a spectrometer.

Fig. 11 is another example of application of a substrate assembly for analysis. The substrate assembly 81 for analysis uses a tortuous glass tube comprising straight portions 83 and bent portions 85. The straight portions 53 are disposed on the same plane and are arranged in parallel relation to each other with a predetermined space therebetween. The glass tube contains gold particles vapor-deposited thereon. To conduct an analysis, the glass tube is filled with an aqueous solution containing analyte molecules, and a laser beam L is irradiated in a direction perpendicular to the straight portions 83 to measure Raman scattering R, using a spectrometer.

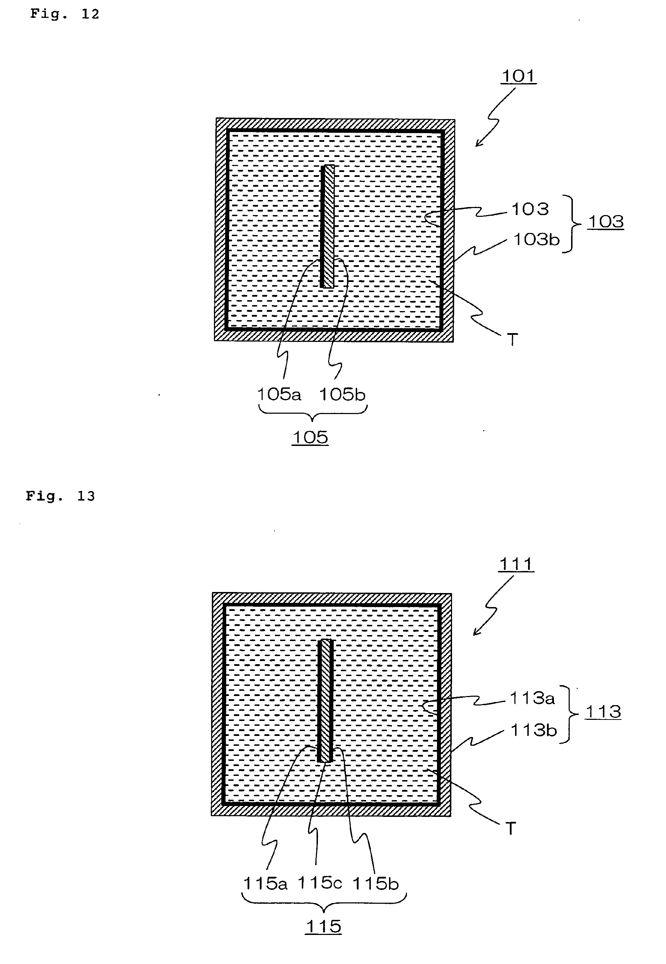

Fig. 12 is still another example of application of a substrate assembly for analysis. The substrate assembly 101 for analysis comprises: a hollow rectangular or cubic substrate 103 for analysis; and a plate-like substrate 105 for analysis placed in the substrate 103. The substrate 103 for analysis comprises: an transparent substrate 103b made of a hollow rectangular glass; and gold particles 10a applied to an inner wall of the transparent substrate 103. The plate-like substrate 105 for analysis disposed inside comprises a plate-like glass substrate 105b and gold particles 105a applied to a surface of the substrate 105b. The substrate assembly 101 for analysis is filled with a sample T. In the substrate assembly 101 of the above-described structure, light from the outside undergoes a maximum of five transmissions through layers of gold particles 5 until it is reflected. Therefore, this substrate 101 can bring about the same effect as the substrate assembly for analysis of Fig. 6.

Fig. 13 shows still another example of application of a substrate assembly for analysis. The substrate assembly 111 for analysis comprises: a hollow rectangular or cubic substrate 113 for analysis; and a plate-like substrate 115 for analysis placed in the substrate 113. The substrate 113 for analysis comprises: a transparent substrate 113b made of a hollow rectangular glass; and gold particles 113a applied to an inner wall of the transparent substrate 113b. The plate-like substrate 115 placed inside comprises a plate-like glass substrate 105c and layers of gold particles 115a and 115b applied to opposite sides of the plate-like glass substrate 105c. The substrate assembly 111 for analysis is filled with a sample T. In the substrate assembly 111 for analysis of the above-described structure, light from the outside undergoes a maximum of seven transmissions through layers of gold particles until it is reflected. Therefore, this substrate assembly 111 can bring about the same effect as the substrate assembly for analysis of Fig. 7.

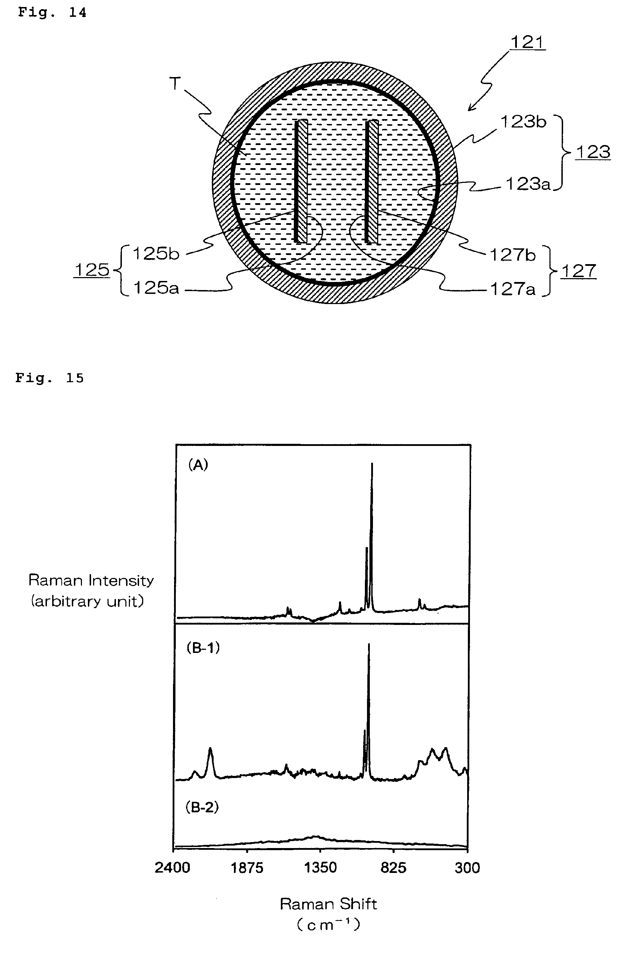

Fig. 14 shows still another example of application of a substrate assembly for analysis. The substrate assembly 121 for analysis comprises: a cylindrical substrate 123 for analysis; and two plate-like substrates 125 and 127 for analysis placed in the substrate 123. The substrate 123 for analysis comprises: a transparent substrate 123b made of a hollow glass cylinder; and gold particles 123a applied to an inner wall of the transparent substrate 123b. The plate-like substrates 125 and 127 placed inside comprise plate-like glass substrates 125b and 127b and gold particles 125a and 127a applied to surfaces of the glass substrates 125b and 127b, respectively. The substrate assembly 121 for analysis is filled with a sample T. In the substrate assembly 121 for analysis of the above-described structure, light from the outside undergoes a maximum of seven transmissions through layers of gold particles until it is reflected. Therefore, the substrate assembly 121 can bring about the same effect as the substrate assembly for analysis of Fig. 7.

Next, specific measurement and analysis will be described. In a Raman measurement, a commercially available Raman spectrometer was used. This Raman spectrometer has a measurement range of 300 to 2400 $cm^{-1}$. The excitation wavelength of laser light for exciting a substrate for analysis was 785 nm. A CCD was used as a detector to take measurements for 1 second $\times$ 5 (5 seconds in total). The measurement method uses a commercially available probe. The sample is a pyridine aqueous solution. The pyridine aqueous solution is an enhancement checking element widely used in surface-enhanced Raman spectroscopy (SERS) research. Ultrapure water was used to prepare the pyridine aqueous solution. For a film measurement, a commercially available slab optical waveguide was used. In addition to the above conditions, Raman measurements using the optical waveguide were taken for 1 second $\times$ 10 (10 seconds in total) at an incident angle of 40°. An end surface of the optical waveguide opposite to a signal detecting portion was vapor-deposited for refection of laser light, and a top surface was vapor-deposited by the above-described gold vapor-deposition method.

As an example, Fig. 15 shows a normal (no enhancement) Raman spectrum (A) of a 1M pyridine aqueous solution, an ordinary Raman spectrum (B-1) of a $10^{-4}$M pyridine aqueous solution, and a multiple-enhancement Raman spectrum (B-2)(three enhancements). A background correction was made to these spectra by subtracting a Raman spectrum, which was obtained by filling pure water in a glass cylinder before an actual measurement, from a Raman spectrum of a sample. As shown in Fig. 15, a peak was observed in the normal Raman spectrum (A) of the 1M pyridine solution. However, no peak was observed in the normal Raman spectrum (B-1) of the $10^{-4}$M pyridine aqueous solution due to its low concentration. On the other hand, a peak of a Raman shift was observed in the $10^{-4}$M pyridine aqueous solution (B-1) by three multiple enhancements, as in the Raman spectrum (A) of the high-concentration aqueous solution, and enhancement of Raman scattering was confirmed.

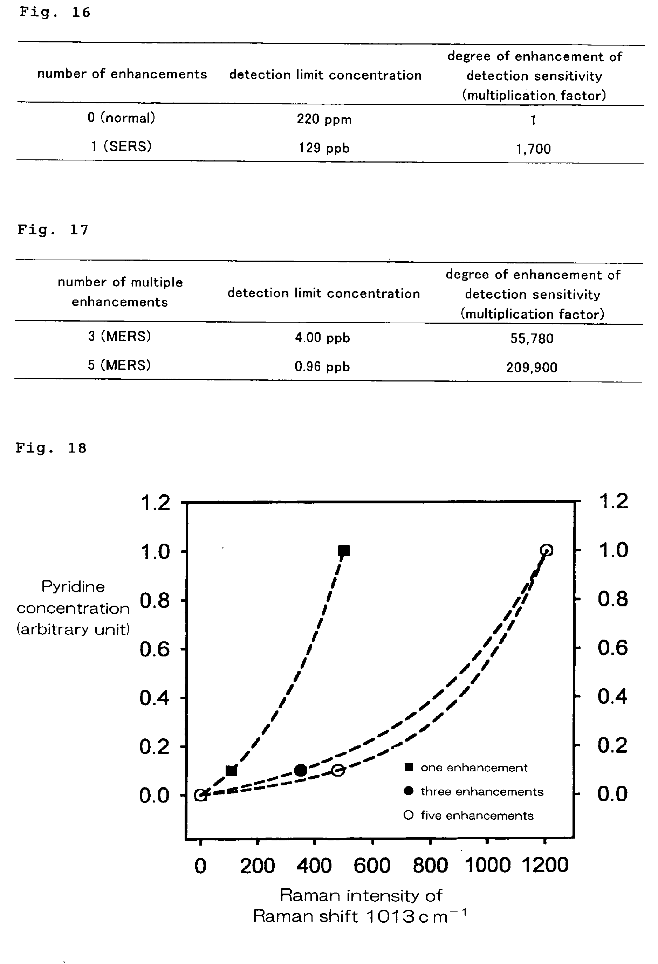

The relationship between the peak intensity of the Raman spectrum and concentration of the pyridine aqueous solution was obtained by drawing detection lines in a graph of the peak intensities of Raman shift 1013 $cm^{-1}$ due to C-H in-plane bending vibrations of pyridine on the X axis and corresponding concentrations on the Y axis obtained in Raman measurements of each enhancement or multiple enhancements (refer to Fig. 18). The Raman peak intensities of Raman shift 1013 $cm^{-1}$ were calculated, using the following equation.

$$\text{Peak intensity} = [\text{scattering intensity of Raman shift}$$
$$1013 \text{ cm}^{-1} \text{ (C-H in-plane bending vibrations of pyridine)}] -$$
$$[\text{average of scattering intensity on either side of the peak of}$$
$$\text{Raman shift } 1013 \text{ cm}^{-1}]$$

As a result, an increase in concentration was observed with an increase in peak intensity, and the presence of quantitativeness was confirmed. Therefore, detection limit concentrations and degrees of enhancement of detection sensitivity were calculated for each enhancement and multiple enhancements. The detection limit concentrations were calculated with concentrations of a pyridine aqueous solution at S/N (signal to noise ratio) = 3. The noise level is represented in root mean square (RMS) values in a range of 2300 to 2350 $cm^{-1}$ where no peak was observed in the Raman spectrum. Detection limit signal values were obtained and used to calculate detection limit concentrations, comparing with the detection lines of Fig. 18. The degrees of enhancement of detection limits were calculated, setting the detection limit concentration with no enhancement to 1. The results are shown in Figs. 16 and 17. The detection limit was 200 ppm in a normal Raman measurement (no enhancement), but was 129 ppb in SERS (one enhancement), which is a 1,700-fold increase in a degree of enhancement of detection sensitivity (refer to Fig. 16). On the other hand, the detection limit was 0.96 ppb in MERS (five multiple enhancements), which is 209,900-fold of a normal Raman measurement in degree of enhancement of detection sensitivity (refer to Fig. 17). It is confirmed that Raman scattering is enhanced by MERS which is greater than 10,000-fold that obtained by a normal Raman spectrometer in detection sensitivity.

It was also found that the degree of enhancement of detection sensitivity increases with the number of multiple enhancements. This can be attributed to the facts that a plurality of SERS measurements can be taken simultaneously, using a single laser source and can also be attributed to enhancements caused by a luminous phenomenon or a resonance with Raman scattered light due to arrangement of a plurality of substrates in a certain volume of an aqueous solution. Further, this suggests that the degree of enhancement of detection sensitivity increases simply in proportion to the number of substrates or at a greater rate, since analyte molecules are more likely to be absorbed onto the substrates. The foregoing confirms advantageous effects of the multiple enhancement Raman spectroscopy.

An enhancement of Raman scattering was also observed when a coating of amorphous fluorocarbon resin (product name: Cytop) of the submicron order was applied to a vapor-deposited substrate surface, proving that this coating works.

Using the above-described technique, measurements were taken of a carbamate pesticide, carbaryl (1-naphthyl methyl carbamate), which is suspected to be an endocrine disruptor and is restricted in use as a residual agricultural chemical. As a result, an enhancement in sensitivity that is equivalent to that of a pyridine aqueous solution was confirmed.

A heavy metal was also measured by the present invention. The measured heavy metal was potassium dichromate ($K_2Cr_2O_7$) containing hexavalent chromium, which was adjusted to a proper concentration, using ultrapure water, and was used in measurements. A substrate for measurement was prepared by vapor-depositing gold thereon, using a commercially available metal ion coater. The Raman measurements were taken, using, as an example, a commercially available Process Raman Spectrometer PI-200 (produced by Process Instruments Inc). The measurement range was between 300 and 2400 cm$^{-1}$; the excitation wavelength was 785 nm, the detector was a CCD, and the measurement was taken for 1 second $\times$ 5 (five seconds in total). The measurement method was conducted, using, as an example, a commercially available probe (produced by InPhotonics).

In a normal Raman measurement (no multiple enhancement), a sample (about 300 ml) was filled in a glass tube. In a SERS measurement (one multiple enhancement), a vapor-deposited cover glass was placed in a glass tube. In a MERS measurement (three multiple enhancements), a sample (about 300 ml) was filled in a vapor-deposited glass tube.

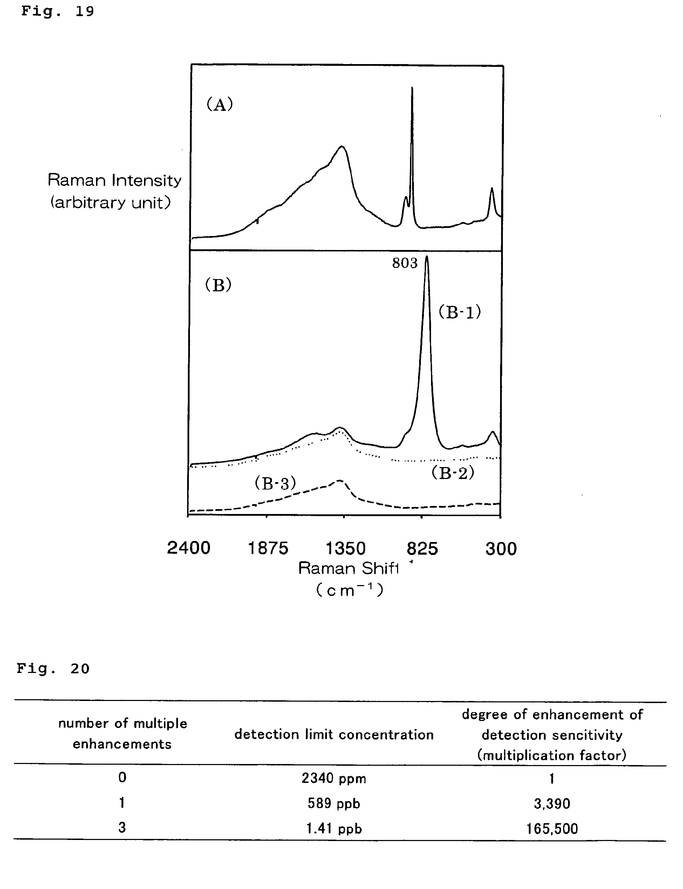

Fig. 19 shows a normal Raman spectrum (A) of an aqueous solution of 0.4M potassium dichromate, an enhanced spectrum (B-1: solid line) of an aqueous solution of 10$^{-4}$M potassium dichromate by three multiple enhancements, an enhanced spectrum (B-2: dotted line) of ultrapure water by three multiple enhancements, and a normal Raman spectrum (B-3: broken line) of an aqueous solution of 10$^{-3}$ M potassium dichromate. The line B-2 in Fig. 19 indicates an enhancement of Raman scattering. Therefore, the relationship between the scattering intensity and concentration at 803 cm$^{-1}$ where an enhancement of Raman scattering was observed was plotted to draw a detection line and calculate a detection limit and a degree of enhancement for each enhancement. The detection limit was calculated with an S/N ratio (signal to noise ratio) = 3. The noise level is denoted in root mean square (RMS) in a range of 2300-2350 cm$^{-1}$ where no peak was observed in the enhanced spectrum. The detection limit was calculated for each enhancement, setting the detection limit with no enhancement to 1. The result is shown in Fig. 20, which proves that MERS measurements of a heavy metal are feasible.

Further, the present invention was also used for taking measurements of fungi. Specimen strains were Esherichia coli O157 H:7 and Staphylococcus aureus. Each fungus was shaken and cultivated at 37°C overnight. A centrifugal harvest from 10 ml of a culture (4°C, 8000 g, 5 minutes) and a cleaning with sterile water were repeated five times. Subsequently, the fungus was mixed with 1 ml of sterile water and diluted to a proper concentration to take a measurement. A substrate for measurement was formed by vapor-depositing silver thereon, using a commercially available metal ion coater. A commercially available Process Raman spectrometer PI-200 (produced by Process Instruments Inc), as an example, was used in a Raman measurement. The measurement range was 300-2400 cm$^{-1}$; the excitation wavelength was 785 nm; the detector was a CCD; and the measurement was taken for 1 second $\times$ 5 (five seconds in total). The measurement method was conducted, using a commercially available probe (produced by InPhotonics) as an example. 300 ml of a sample was used in the measurement.

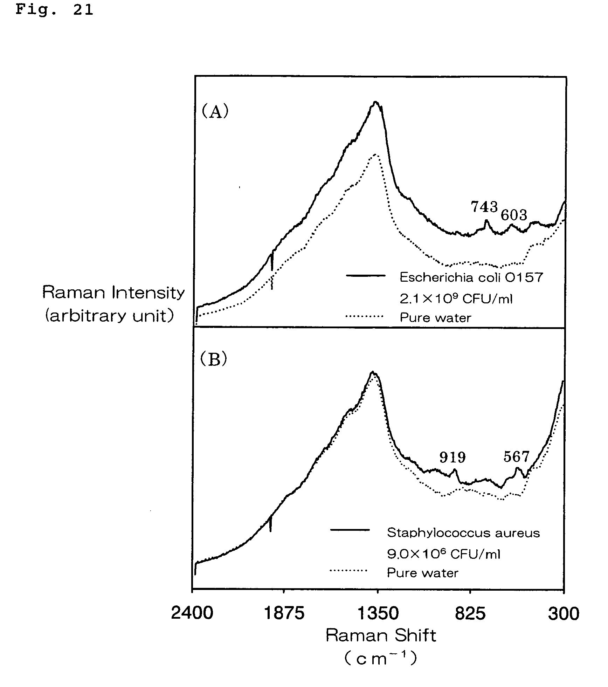

Fig. 21 shows Raman spectra of Esherichia coli 0157 H:7(A) and Staphylococcus aureus (B), using MERS. In (A) of Fig. 21, peaks occur at 603 and 743 cm$^{-1}$. In (B) of Fig. 21, peaks occur at 567 and 919 cm$^{-1}$. This proves that MERS measurement of food-poisoning bacteria is feasible and that Esherichia coli 0157 H:7 and Staphylococcus aureus can be distinguished.

Further, using an optical waveguide, measurements were taken for a food packaging wrap film mainly composed of polyvinylidene chloride. As a result, a clear spectrum of a very small amount of additive on a surface of the film was obtained. This suggests that, other than aqueous solutions, trace substances on a surface of a solid can be measured.

Other than that, it is considered that MERS can be used to measure amino acid, protein, nucleic acid, toxin, fungus, polyamine, wood flour, paper, polyimide, black lead polycyclic aromatic, gas, plastic, conductive polymer, and so on.

INDUSTRIAL APPLICABILITY

The present invention, since being capable of analyzing a low-concentration substance with high sensitivity, can be applied to various analyses of substances in the environment, food, or medical field, specifically, quick detection of a toxic component such as a residual agricultural chemical or an environmental hormone in a river, a farmland, drinking water, or industrial waste water, detection of protein, peptide, or fungus in a living body, analyses of toxic components in the atmosphere, and so on.

## Claims

1. A substrate for analysis for use in Raman spectroscopic analysis comprising a predetermined transparent substrate and metal particles unevenly applied to a surface of the transparent substrate.

2. A substrate for analysis according to Claim 1, wherein the metal particles are concentrated with a space therebetween of a nanometer-order in a predetermined region of the transparent substrate, and are dispersed with a space of a micrometer-order therebetween in another region.

3. A substrate for analysis according to Claim 1 or 2, wherein the metal particles are gold, silver, copper, platinum, palladium, aluminum, titanium, cobalt.

4. A substrate for analysis according to any one of Claims 1 to 3, wherein the transparent substrate has a plate-like shape.

5. A substrate for analysis according to any one of Claims 1 to 3, wherein the transparent substrate has a cylindrical shape.

6. A substrate for analysis according to any one of Claims 1 to 3, wherein the transparent substrate has a rectangular shape.

7. A substrate assembly for analysis comprising at least two plate-like substrates for analysis recited in Claim 4, the plate-like substrates being disposed in parallel relation to each other.

8. A substrate assembly for analysis comprising a cylindrical substrate for analysis recited in Claim 5; and at least one plate-like substrate for analysis recited in Claim 4, the plate-like substrate being inserted into the cylindrical substrate for analysis.

9. A substrate assembly for analysis comprising at least two cylindrical substrates for analysis recited in Claim 5 of different diameters, the substrate for analysis of a smaller diameter being disposed in the substrate for analysis of a larger diameter.

10. A substrate assembly for analysis comprising: a rectangular substrate for analysis recited in Claim 6; and at least one plate-like substrate for analysis recited in Claim 4, the plate-like substrate being inserted in the rectangular substrate for analysis.

11. A substrate assembly for analysis according to any one of Claims 6 to 10, wherein the plurality of substrates each have particles of a different metal applied thereon.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Raman Intensity
(arbitrary unit)

(A)

(B-1)

(B-2)

2400     1875     1350     825     300

Raman Shift
( c m$^{-1}$ )

Fig. 16

| number of enhancements | detection limit concentration | degree of enhancement of detection sensitivity (multiplication factor) |
|---|---|---|
| 0 (normal) | 220 ppm | 1 |
| 1 (SERS) | 129 ppb | 1,700 |

Fig. 17

| number of multiple enhancements | detection limit concentration | degree of enhancement of detection sensitivity (multiplication factor) |
|---|---|---|
| 3 (MERS) | 4.00 ppb | 55,780 |
| 5 (MERS) | 0.96 ppb | 209,900 |

Fig. 18

Fig. 19

Fig. 20

| number of multiple enhancements | detection limit concentration | degree of enhancement of detection sencitivity (multiplication factor) |
|---|---|---|
| 0 | 2340 ppm | 1 |
| 1 | 589 ppb | 3,390 |
| 3 | 1.41 ppb | 165,500 |

Fig. 21

EP 1 950 556 A1

## INTERNATIONAL SEARCH REPORT

International application No.

PCT/JP2006/320703

A. CLASSIFICATION OF SUBJECT MATTER
*G01N21/65*(2006.01)i

According to International Patent Classification (IPC) or to both national classification and IPC

B. FIELDS SEARCHED

Minimum documentation searched (classification system followed by classification symbols)
G01N21/62-G01N21/74, G01N33/48-G01N33/98

Documentation searched other than minimum documentation to the extent that such documents are included in the fields searched

| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)
JSTPlus(JDream2)

C. DOCUMENTS CONSIDERED TO BE RELEVANT

| Category* | Citation of document, with indication, where appropriate, of the relevant passages | Relevant to claim No. |
|---|---|---|
| Y | JP 2005-77362 A (Keio University), 24 March, 2005 (24.03.05), Full text; Fig. 1 (Family: none) | 1,3-6 |
| Y | WO 2002/073164 A1 (Takao FUKUOKA), 19 September, 2002 (19.09.02), Page 12, lines 16 to 17 & US 2004/101908 A1 & EP 1376098 A1 | 1,3-6 |
| Y | JP 2003-510065 A (Array Bioscience Corp.), 18 March, 2003 (18.03.03), Par. No. [0014] & US 2003/180720 A1 & EP 1242510 A & WO 2001/023459 A1 | 1,3-6 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
20 November, 2006 (20.11.06)

Date of mailing of the international search report
12 December, 2006 (12.12.06)

Name and mailing address of the ISA/
Japanese Patent Office

Authorized officer

Facsimile No.

Telephone No.

Form PCT/ISA/210 (second sheet) (April 2005)

21

EP 1 950 556 A1

INTERNATIONAL SEARCH REPORT

International application No.

PCT/JP2006/320703

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2003-511666 A  (Surromed, Inc.),<br>25 March, 2003 (25.03.03),<br>Par. No. [0022]<br>& EP 1226421 A          & WO 2001/025757 A1 | 5,6 |

Form PCT/ISA/210 (continuation of second sheet) (April 2005)

22